**Europäisches Patentamt**

**European Patent Office**

**Office européen des brevets**

(11) Veröffentlichungsnummer : **0 240 784**
**B1**

(12) **EUROPÄISCHE PATENTSCHRIFT**

(45) Veröffentlichungstag der Patentschrift :
26.04.89

(21) Anmeldenummer : 87103887.3

(22) Anmeldetag : 17.03.87

(51) Int. Cl.⁴ : **F 16 B 12/40**

(54) **Verbinder für Rohre oder rohrähnliche Profile.**

(30) Priorität : 08.04.86 DE 3611741

(43) Veröffentlichungstag der Anmeldung :
14.10.87 Patentblatt 87/42

(45) Bekanntmachung des Hinweises auf die Patenterteilung : 26.04.89 Patentblatt 89/17

(84) Benannte Vertragsstaaten :
**AT BE CH DE FR GB LI LU NL**

(56) Entgegenhaltungen :
DE—A— 2 430 921
DE—A— 2 757 040
DE—A— 3 405 928
DE—C— 1 004 433
DE—U— 1 829 241
DE—U— 1 983 339
FR—A— 2 448 065
GB—A—    958 706
US—A— 3 701 450
US—A— 4 388 747

(73) Patentinhaber : **SCHÜCO International GmbH & Co.**
**Karolinenstrasse 1-15**
**D-4800 Bielefeld 1 (DE)**

(72) Erfinder : **Die Erfinder haben auf ihre Nennung**
**verzichtet**

(74) Vertreter : **Stracke, Alexander, Dipl.-Ing. et al**
**Jöllenbecker Strasse 164**
**D-4800 Bielefeld 1 (DE)**

## Beschreibung

Die vorliegende Erfindung betrifft einen Verbinder für Rohre oder rohrähnliche Profile entsprechend dem Gattungsbegriff des Anspruches 1.

Derartige Verbinder werden vorzugsweise eingesetzt, um Rohre für einen Messestand oder eines Regalsystems im Ladenbau miteinander zu verbinden. Insbesondere dort, wo innerhalb kurzer Zeit Rohrsysteme zusammengenaut bzw. demontiert werden müssen, beispielsweise auch bei Sport- oder Sporthilfsgeräten, finden Verbinder der gattungsgemäßen Art bevorzugt Verwendung.

In Funktion werden die Spannbacken eines Verbinders, der praktisch einen Dorn darstellt, der in die Rohrenden zweier aneinanderstoßender Rohre geschoben ist, mit Hilfe des Spreizelementes gegen die Innenwandung der Rohre gedrückt und so festgeklemmt, daß eine Verbindung der Rohre entsteht, die den geforderten Ansprüchen voll und ganz genügt.

Ein solcher Verbinder ist beispielsweise aus der DE-OS 34 05 928 bekannt.

Dort sind die aus einem längsgeteilten Dorn bestehenden Spannbacken lose zusammengesteckt, wobei die halbschalenförmig ausgebildeten Spannbacken jeweils mit einer Hälfte eines Ringes versehen sind. Diese Halbringe bilden sowohl einen Endanschlag für die aufzuschiebenden Rohre als auch durch in Querrichtung des Verbinders verlaufende Bohrungen, durch die ein Werkzeug in das Innere des Verbinders führbar ist, mit dem das Spreizelement betätigbar ist, eine Montagehilfe.

Weiter sind die beiden Einschubhälften dieses Verbinders jeweils mit Viertelschalen versehen, die einerseits an den Spannbacken anliegen und sich andererseits an der Innenwandung der aufgeschobenen Rohre abstützen. Vorzugsweise sind dabei dieses Viertelschalen aus Kunststoff gebildet.

Dadurch bedingt, daß dieser bekannte Verbinder aus einer Vielzahl von Einzelteilen besteht, ist seine Herstellung nur unter fertigungstechnisch hohem Aufwand möglich. Dies hat zwangsläufig hohe Herstellungskosten zur Folge, die sich auf die Kostenstruktur eines gesamten Rohrsystems besonders nachteilig auswirkt, da hier jeweils eine Vielzahl von Verbindern zum Einsatz kommen.

Auch in funktioneller Hinsicht hat sich der Einsatz des genannten Verbinders aufgrund seiner vielen Einzelteile als nachteilig erwiesen, da hierdurch eine gewissen Instabilität zu verzeichnen ist, die einem wünschenswerten und erforderlichen Maß an Stabilität entgegensteht.

Der vorliegenden Erfindung liegt daher die Aufgabe zugrunde, einen Verbinder der gattungsgemäßen Art so zu gestalten, daß er mit konstruktiv einfachsten Mitteln einen festen und in wünschenswerter Weise stabilen Verbund ermöglicht und einfach und damit kostengünstigherstellbar ist.

Diese Aufgabe wird erfindungsgemäß durch die im Kennzeichen des Anspruches 1 aufgeführten Merkmale gelöst.

Danach ist es nun möglich, den Verbinder einstückig, beispielsweise als Strangpreßteil, herzustellen. So können die Stege die Linien eines Rhombus bilden, dessen sich gegenüberliegende Ecken einmal im Mittenbereich der jeweiligen Spannbacke und zum anderen jeweils im Bereich einer angeformten Leiste verlaufen. Erfindungsgemäß dienen diese Leisten als Aufnahme bzw. Widerlager für ein Spreizelement, das beispielsweise aus einem in einer Leiste in axialer Richtung festgelegten Gewindestift besteht, der in der anderen Leiste in eine Gewindebohrung eingeschraubt ist. Nach dem Kniehebelprinzip werden bei einem Drehen des Gewindestiftes die sich gegenüberliegenden Stege auseinandergedrückt oder zusammengezogen. Je nachdem ergibt sich für die Spannbacken eine umgekehrte Bewegung zueinander, d. h. bei einem Auseinanderdrücken der Stege bewegen sich die Spannbacken aufeinander zu und bei einem Zusammenziehen der Stege voneinander fort.

So ist es nicht nur möglich, Rohrtoleranzen auszugleichen, sondern auch einen überaus festen und starren Verbund zu erzielen.

Wie eine vorteilhafte Ausgestaltung der Erfindung vorsieht, sind die Stege in ihren Endbereichen, also einmal im Übergangsbereich zur jeweiligen Spannbacke und zum andern im Übergangsbereich zur entsprechenden Leiste, mit in Längsrichtung verlaufenden Einschnürungen versehen, die das Widerstandsmoment herabsetzen und so das Bewegungsspiel der Stege erleichtern.

Kunststoff- oder Gummischeiben, von denen jeweils einer an der Außenseite mindestens einer Spannbacke vorgesehen ist und aus ihr herausragt, die eine weitere vorteilhafte Ausgestaltung der Erfindung kennzeichnen, bilden einen Anschlag für die aufgeschobenen Rohrenden. Neben einer dadurch ermöglichten genauen Justierung des Verbinders wird auch eine Möglichkeit des freien Zugangs zum Spreizelement geschaffen, dann nämlich, wenn die Scheiben auf einer Querschnittsebene mit dem Spreizelement angeordnet sind. Zweckmäßigerweise sollten die Scheiben dann so groß dimensioniert sein, daß der Abstand zwischen zwei Rohrenden mindestens gleich groß dem Abmaß eines Werkzeuges, beispielsweise eines Schraubendrehers ist, mit dem das Spreizelement betätigbar ist.

Für unterschiedliche Querschnittsmaße der zu verbindenden Rohre sind selbstverständlich auch in ihrem Querschnittsmaß unterschiedliche Verbinder einzusetzen, deren Spreizhub jedoch den Eigenschaften des eingesetzten Verbindermaterials angepaßt sein sollte.

Weitere vorteilhafte Ausgestaltungen der Erfindung sind in den Unteransprüchen gekennzeichnet.

Ausführungsbeispiele der Erfindung werden nachfolgend anhand beigefügter Zeichnungen beschrieben. Es zeigen :

Fig. 1 eine Draufsicht auf einen erfindungsgemäß ausgebildeten Verbinder,

Fig. 2 ein weiteres Ausführungsbeispiel des Verbinders in einer Querschnittdarstellung,

Fig. 3 einen Längsschnitt durch die Enden zweier mittels eines Verbinders miteinander verbundener Rohre,

Fig. 4 die in der Fig. 3 dargestellten Rohrenden in einer Seitenansicht,

Fig. 5 einen Querschnitt durch ein Rohrende und den Verbinder gemäß der Linie V-V in Fig. 3,

Fig. 6 einen weiteren Querschnitt gemäß der Linie VI-VI in Fig. 3,

Fig. 7 einen weiteren Querschnitt gemäß der Linie VII-VII in Fig. 3,

Fig. 8 einen Querschnitt durch ein ebenfalls mit einem neuerungsgemäß ausgebildeten Verbinder bestückbares Rohr,

Fig. 9 + 10 weitere Ausführungsbeispiele des erfindungsgemäßen Verbinders beim Einsatz in Rohrsystemen in Querschnittsdarstellungen.

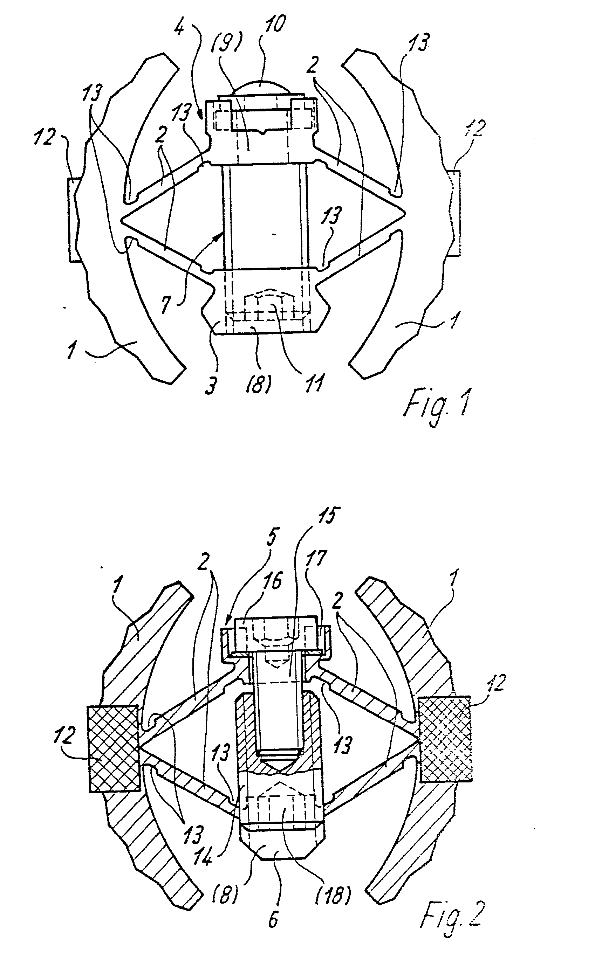

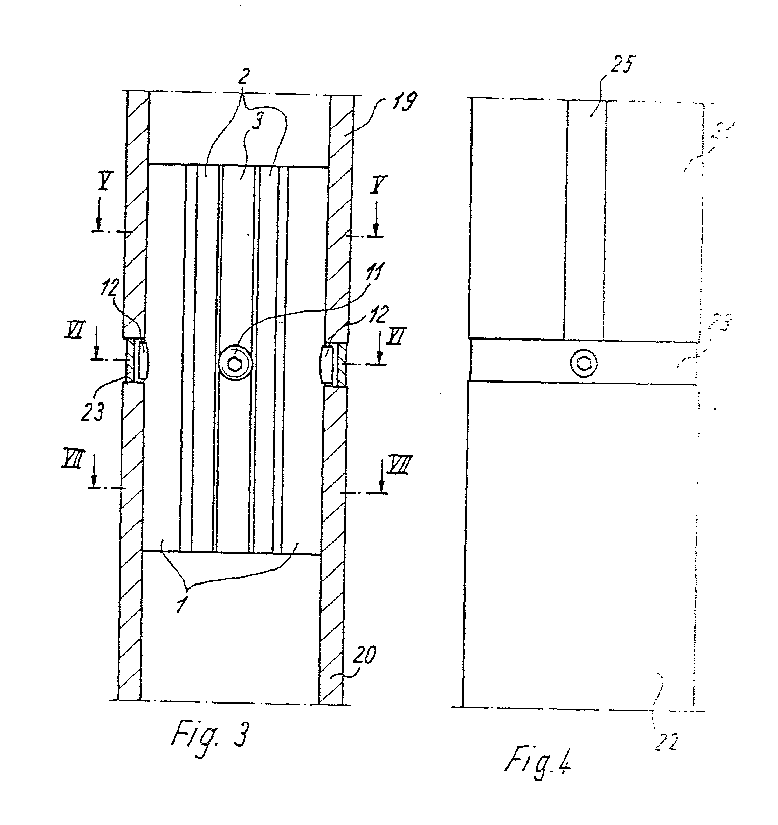

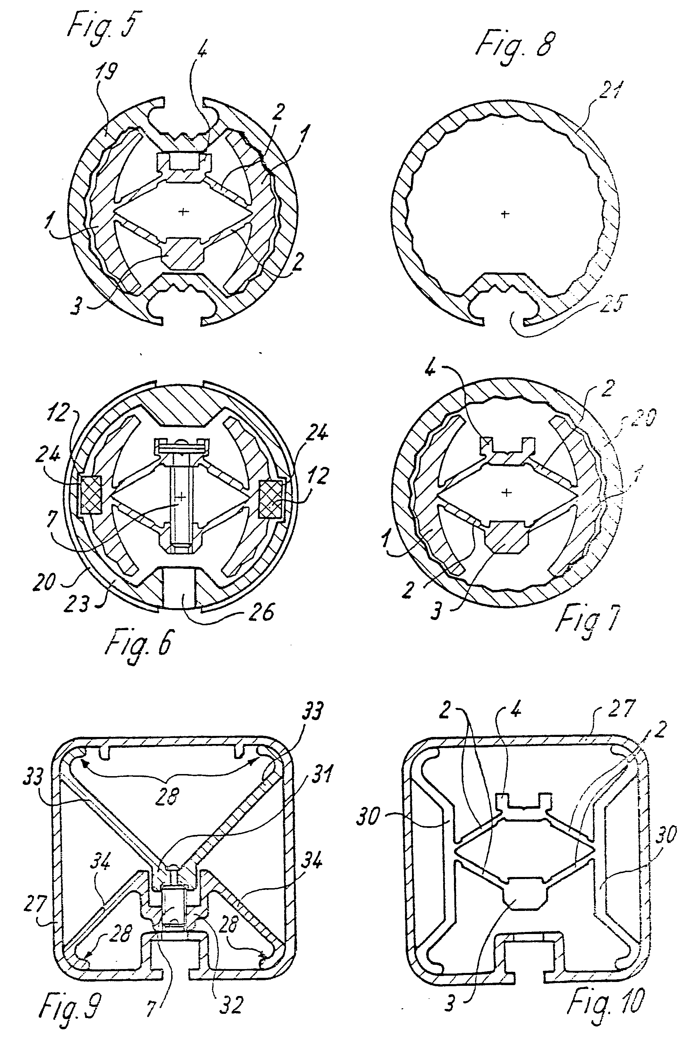

Die in den Fig. 1 und 2 dargestellten Verbinder bestehen im wesentlichen aus zwei sich gegenüberliegenden schalenförmigen Spannbacken 1, deren Außenflächen mit einer Profilierung versehen sind.

Ausgehend vom Mittenbereich der Innenseite jeder Spannbacke 1 erstrecken sich zwei winklig zueinanderstehende Stege 2, wobei die Stege 2 beider Spannbacken 1 eine etwa rautenförmige Grundfläche begrenzen.

In den den Innenseiten der Spannbacken 1 abgewandten, sich gegenüberliegenden, durch jeweils zwei Stege 2 gebildeten Ecken, sind Leisten 3, 4, 5, 6 angeordnet, die der Aufnahme von Spreizelementen dienen.

Dabei ist das Spreizelement des in der Fig. 1 dargestellten Verbinders als ein Gewindebolzen 7 ausgebildet, der in eine Gewindebohrung 8 der Leiste 3 eingeschraubt ist. Mit einem Zapfen 9 ist der Gewindebolzen 7 in der gegenüberliegenden Leiste 4 drehbar festgelegt, wobei er einerseits durch einen Ansatz und andererseits durch einen Nietkopf 10 in axialer Richtung gesichert ist.

Durch ein in eine Werkzeugaufnahme 11 ein- führbares Werkzeug, beispielsweise einen Sechs- kantschlüssel, wird der Gewindebolzen 7 gedreht, so daß die Stege 2 sich paarweise spreizen oder zusammenziehen, wobei die angeschlossenen Spannbacken 1 entgegengesetzte Bewegungen vollführen, also sich beim Spreizen der Stege 2 aufeinanderzu und bei deren Zusammenziehen sich voneinander fort bewegen. In vorteilhafter Weise ist der Gewindebolzen 7 mit einem Linksgewinde versehen, so daß sich bei dessen Drehen im Uhrzeigersinn die Spannbacken 1 voneinander fort bewegen. Scheiben 12, die aus Kunststoff oder Gummi hergestellt sein können, und die in Bohrungen der Spannbacken 1 festgelegt sind und die über deren Außenkontur hinausragen, dienen als Anschläge für auf den Verbinder aufschiebbare Rohrenden, die durch den Verbinder miteinander verbunden werden sollen.

Bei dem in der Fig. 2 dargestellten Ausführungsbeispiel ist das Spreizelement aus einem Gewindestift 14 gebildet, der mit einem Ende in eine Gewindebohrung der Leiste 6 eingeschraubt ist und dessen anderes Ende ein mit einem Innengewinde versehenes Sackloch 15 aufweist. In dieses Sackloch 15 ist eine Innensechskantschraube 16 eingedreht, die sich mit ihrem Kopf am Grunde einer Senkbohrung 17 der Leiste 5 abstützt.

Da sich die Innensechskantschraube 16 am Grund des Sackloches 15 abstützt, wird bei einem Drehen der Innensechskantschraube 16 im Uhrzeigersinn der Gewindestift 14 so mitgedreht, daß sich die Stege 2 aufeinanderzu und somit die Spannbacken voneinander fort bewegen, so daß sie, in Rohrenden eingeführt, sich an deren Innenwandung abstützen und dort eine Klemmwirkung erzielen. Zum Lösen der Klemmung wird der Gewindestift 14, der auf seiner der Innensechskantschraube 16 abgewandten Stirnfläche mit einer Werkzeugaufnahme 18 versehen ist, ebenfalls im Uhrzeigersinn gedreht, so daß sich die gegenüberliegenden Stege 2 spreizen und sich entsprechend die Spannbacken 1 aufeinanderzu bewegen.

Während bei diesem Ausführungsbeispiel das Lösen bzw. Festklemmen des Verbinders von jeweils einer anderen Seite aus erfolgen muß, können diese Betätigungen von einer Seite aus vorgenommen werden.

Jeder Endbereich eines Steges 2 ist mit einer Einschnürung 13 versehen, die das Widerstandsmoment in diesem Bereich herabsetzt und so unter geringsmöglichem Kraftaufwand die entsprechen den Bewegungen der Stege 2 ermöglicht. Dabei sind die Einschnürungen 13 wechselweise auf den sich gegenüberliegenden Außenflächen vorgesehen.

Einen erfindungsgemäß ausgebildeten Verbinder in Funktion zeigen die Fig. 3 und 4.

Insbesondere in der Fig. 3 ist dabei zu erkennen, daß jeweils ein Ende von Rohren 19, 20 auf den Verbinder aufgeschoben sind, und zwar bis zu einem einen Anschlag bildenden Ring 23, der auf den Verbinder aufgeschoben ist und in seiner Lage durch die Scheiben 12 fixiert wird. Dabei erfolgt die Fixierung des Ringes 23 dadurch, daß die Scheiben 12 in Ausnehmungen 24 des Ringes 23 einliegen, wie besonders deutlich in der Fig. 6 zu erkennen ist.

Die Fig. 4 stellt im Prinzip in gleicher Form die Verbindung zweier Rohre 21, 22 dar, wie die Fig. 3.

Um zu verdeutlichen, daß der erfindungsgemäß ausgebildete Verbinder für viele Rohrausführungen eingesetzt werden kann, weist eines der beiden in der Fig. 4 dargestellten Rohre 21 eine Längsnut 25 auf. Ein Querschnitt dieses Rohres 21 ist in der Fig. 8 dargestellt.

Die Fig. 5 hingegen zeigt einen Querschnitt durch das Rohrsystem einschließlich des Verbinders entsprechend der Linie V-V in Fig. 3. Dabei ist zu erkennen, daß die sich gegenüberliegenden Spannbacken 1 auf ihrer Außenseite eine im Querschnitt zackenförmige Profilierung aufweisen, die in etwa einer Profilierung der Innenwandung der Rohre 19, 20 entspricht. Beim Spreizen der Klemmbacken 1 gehen diese mit den Rohren 19, 20 eine formschlüssige Verbindung ein, so daß ein fester verdrehsicherer Verbund hergestellt ist.

Der in der Fig. 6 im Querschnitt zu erkennende Ring 23 ist mit einem Schlitz 26 versehen, der den werkzeugaufnahmeseitigen Kopf des Gewindebolzens 7 von außen frei zugänglich läßt, so daß ein Werkzeug ohne weiteres in die Werkzeugaufnahme des Gewindebolzens 7 einführbar ist.

Weitere Ausführungsbeispiele des Verbinders sind in den Fig. 9 und 10 dargestellt. Hierbei dient der Verbinder zur Verbindung von quadratischen Rohren 27, die selbstverständlich auch einen rechteckigen oder beliebigen (ovalen, Mehrkant usw.) Querschnitt aufweisen können.

Der in der Fig. 9 gezeigte Verbinder besteht aus hakenförmigen Spannbacken 28, die sich jeweils im Eckbereich des Rohres 27 an dessen Innenwand abstützen und an denen Stege 33, 34 angeformt sind, die zur Mitte hin verlaufen und in Leisten 31, 32, in denen der Gewindebolzen 7 aufgenommen ist, münden. Bei diesem Ausführungsbeispiel ist der Verbinder praktisch zweiteilig ausgeführt, wobei die Verbindung der Spannbacken 28 durch den Gewindebolzen 7 erfolgt. Die Leiste 32 übergreift dabei die Leiste 31 und bildet so eine Führung der beiden Verbinderteile. Durch Betätigung des Gewindebolzens 7 werden auch hier die beiden Verbinderteile relativ zueinander bewegt und bewirken so ein Festklemmen bzw. Lösen der Rohre auf dem Verbinderteil.

Im Funktionsprinzip den in den Fig. 1 bis 7 dargestellten Verbindern entsprechend ist der in der Fig. 10 dargestellte ausgebildet. Lediglich seine Spannbacken 30 sind auf die Gegebenheiten beim Verbinden von Vierkantrohren abgestimmt. So liegen auch hier die Spannbacken 30, ebenso wie die in der Figurenbeschreibung zu der Fig. 9 beschriebenen Spannbacken 28 in den Eckbereichen der Innenwandung des Vierkantrohres 27 an. Die übrigen Bereiche des Vierkantrohres 27 bleiben hingegen von den Spannbacken 30 bzw. 28 unberührt, da ansonsten die Gefahr einer ungleichmäßigen Belastung, beispielsweise durch Verschmutzungen innerhalb des Rohres 27, gegeben wäre.

Bezugszeichen

1 Spannbacke
2 Steg
3 Leiste
4 Leiste
5 Leiste
6 Leiste
7 Gewindebolzen
8 Gewindebohrung
9 Zapfen
10 Nietkopf
11 Werkzeugaufnahme
12 Scheibe
13 Einschnürung
14 Gewindestift
15 Sackloch
16 Innensechskantschraube
17 Senkbohrung
18 Werkzeugaufnahme
19 Rohr
20 Rohr
21 Rohr
22 Rohr
23 Ring
24 Ausnehmung
25 Längsnut
26 Schlitz
27 Rohr
28 Spannbacke
29
30 Spannbacke
31 Leiste
32 Leiste
33 Steg
34 Steg

**Patentansprüche**

1. Verbinder für Rohre oder rohrähnliche Profile, bestehend aus zwei, sich gegenüberliegenden Spannbacken, die mittels mindestens eines zwischen ihnen angeordneten Spreizelementes quer zur Längsachse bewegbar sind, wobei auf der Außenseite zumindest einer Spannbacke etwa mittig quer zur Längsachse ein Anschlag festgelegt ist, dadurch gekennzeichnet, daß jede Spannbacke (1, 28, 30) auf ihrer der anderen Spannbacke (1, 28, 30) zugewandten Seite in Längsrichtung verlaufende, winklig zueinander angeordnete Stege (2, 33, 34) aufweist, die in einer Leiste (3, 4, 5, 6, 31, 32) zur Aufnahme des Spreizelementes (7, 14) enden.

2. Verbinder nach Anspruch 1, dadurch gekennzeichnet, daß der Verbinder-Körper einstückig ausgebildet ist, wobei die Stege (2), von denen jeweils zwei von der Innenseite einer Spannbacke (1) ausgehen, rautenförmig zueinander verlaufen und wobei die Leisten (3, 4, 5, 6) in den freien, sich gegenüberliegenden Ecken der Raute angeordnet sind.

3. Verbindern nach Anspruch 2, dadurch gekennzeichnet, daß die Stege (2) in ihren den Leisten (3, 4, 5, 6) sowie den Spannbacken (1) zugewandten Endbereichen Einschnürungen (13) aufweisen.

4. Verbinder nach Anspruch 3, dadurch gekennzeichnet, daß die Einschnürungen (13) auf einer Seite der Stege (2) angeordnet sind.

5. Verbinder nach Anspruch 3, dadurch gekennzeichnet, daß die Einschnürungen (13) auf beiden Seiten der Stege (2) angeordnet sind.

6. Verbinder nach Anspruch 3 oder 5, dadurch gekennzeichnet, daß die Einschnürungen (13) auf beiden Seiten der Stege (2) wechselweise angeordnet sind.

7. Verbinder nach Anspruch 1, dadurch gekennzeichnet, daß jeder Anschlag als eine in die Spannbacke (1) eingelassene Scheibe (12) ausgebildet ist, die über die Außenwandung der Spannbacke (1) hinausragt.

8. Verbinder nach Anspruch 7, dadurch gekennzeichnet, daß der Durchmesser jeder Scheibe (12) mindestens dem Durchmesser eines Werkzeuges zur Betätigung des Spreizelementes entspricht.

9. Verbinder nach einem der Ansprüche 7 und 8, dadurch gekennzeichnet, daß im Bereich der Scheiben .(12) ein Ring (23) über den Verbinder geführt ist.

10. Verbinder nach Anspruch 9, dadurch gekennzeichnet, daß der Ring (23) in seiner Höhe etwa dem Durchmesser der Scheiben (12) entspricht.

11. Verbinder nach Anspruch 9, dadurch gekennzeichnet, daß der Ring (23) auf seiner Innenfläche Ausnehmungen (24) aufweist, in denen die Scheiben (12) einliegen.

12. Verbinder nach Anspruch 9, dadurch gekennzeichnet, daß der Ring (23) einen Schlitz (26) aufweist, der in seiner Breite mindestens dem Durchmesser des Werkzeuges zur Betätigung des Spreizelementes entspricht.

13. Verbinder nach Anspruch 1, dadurch gekennzeichnet, daß bei einer Verbindung von rechteckigen oder quadratischen Rohren (27) die Spannbacken (28, 30) sich in den Eckbereichen der Rohre (27) abstützen.

14. Verbinder nach Anspruch 13, dadurch gekennzeichnet, daß ausgehend von den Abstützbereichen jeder Spannbacke (28) zur Mitte des Verbinders hin Stege (33, 34) verlaufen, die in Leisten (31, 32) münden.

15. Verbinder nach Anspruch 14, dadurch gekennzeichnet, daß die Leiste (31) der einen Spannbacke von der Leiste (32) der anderen Spannbacke umgriffen und in dieser geführt wird.

16. Verbinder nach einem oder mehreren der Ansprüche 1 bis 14, dadurch gekennzeichnet, daß das Spreizelement aus einem Gewindebolzen (7) besteht, der einerseits in eine in einer Leiste (3, 32) vorgesehenen Gewindebohrung (8) eingeschraubt ist und andererseits drehbar und gegen eine axiale Verschiebung gesichert in der anderen Leiste (4, 31) festgelegt ist.

17. Verbinder nach Anspruch 16, dadurch gekennzeichnet, daß ein Zapfen (9) des Gewindebolzens (7) in der genannten anderen Leiste (4) geführt ist, wobei das Ende des Zapfens (9) vernietet ist, während der Gewindebolzen (7) sich mit einem Absatz auf der dem Nietkopf (10) gegenüberliegenden Seite der genannten Leiste (4) abstützt.

18. Verbinder nach Anspruch 16 oder 17, dadurch gekennzeichnet, daß der Gewindebolzen (7) mit einem Linksgewinde versehen ist.

19. Verbinder nach einem oder mehreren der Ansprüche 1 bis 14, dadurch gekennzeichnet, daß das Spreizelement aus einem Gewindestift (14) und einer mit ihm verbundenen Schraube (16) besteht, wobei der Gewindestift (14) in eine Gewindebohrung (8) der Leiste (6) eingedreht ist, während sich die Schraube (16) mit ihrem Kopf an der gegenüberliegenden Leiste (5) abstützt.

20. Verbinder nach Anspruch 19, dadurch gekennzeichnet, daß sich der Kopf der Schraube (16) am Grund einer Senkbohrung (17) abstützt.

21. Verbinder nach einem oder mehreren der Ansprüche 16 bis 20, dadurch gekennzeichnet, daß der Gewindebolzen (7) bzw. der Gewindestift (14) an seiner freien Stirnseite eine Werkzeugaufnahme (11, 18) aufweist.

## Claims

1. A connector for tubes or tube-like members comprising two mutually oppositely disposed clamping jaws which are movable transversely with respect to the longitudinal axis by means of at least one spreading element which is arranged between them, wherein an abutment is fixed on the outward side of at least one clamping jaw substantially centrally transversely with respect to the longitudinal axis, characterised in that each clamping jaw (1, 28, 30) is provided on its side which is towards the other clamping jaw (1, 28, 30) with limbs (2, 33, 34) which extend in the longitudinal direction and which are arranged in angular relationship to each other and which terminate in a bar (3, 4, 5, 6, 31, 32) for receiving the spreading element (7, 14).

2. A connector according to claim 1 characterised in that the connector body is in one piece, wherein the limbs (2), two of which extend from the inward side of each clamping jaw (1), extend in a rhombic shape relative to each other and wherein the bars (3, 4, 5, 6) are arranged in the free, mutually oppositely disposed corners of the rhombus.

3. A connector according to claim 2 characterised in that the limbs (2) have reductions (13) in their end regions which are towards the bars (3, 4, 5, 6) and the clamping jaws (1).

4. A connector according to claim 3 characterised in that the reductions (13) are arranged on one side of the limbs (2).

5. A connector according to claim 3 characterised in that the reductions (13) are arranged on both sides of the limbs (2).

6. A connector according to claim 3 or claim 5 characterised in that the reductions (13) are arranged alternately on both sides of the limbs (2).

7. A connector according to claim 1 characterised in that each abutment is in the form of a disc (12) which is let into the clamping jaw (1) and which projects beyond the outside wall surface of the clamping jaw (1).

8. A connector according to claim 7 characterised in that the diameter of each disc (12) corresponds at least to the diameter of a tool for actuation of the spreading element.

9. A connector according to one of claims 7 and 8 characterised in that a ring (23) is mounted over the connector in the region of the discs (12).

10. A connector according to claim 9 characterised in that the ring (23) substantially corresponds in its height to the diameter of the discs (12).

11. A connector according to claim 9 characterised in that on its inside surface the ring (23) has recesses (24) in which the discs (12) lie.

12. A connector according to claim 9 characterised in that the ring (23) has a slot (26) which in its width corresponds at least to the diameter of the tool for actuating the spreading element.

13. A connector according to claim 1 characterised in that, when connecting rectangular or square tubes (27), the clamping jaws (28, 30) bear against the tubes (27) in the corner regions thereof.

14. A connector according to claim 13 characterised in that limbs (33, 34) extend from the bearing regions of each clamping jaw (28) towards the centre of the connector, the limbs terminating in bars (31, 32).

15. A connector according to claim 14 characterised in that the bar (31) of the one clamping jaw is embraced by the bar (32) of the other clamping jaw and is guided therein.

16. A connector according to one or more of claims 1 to 14 characterised in that the spreading element comprises a screwthreaded bolt (7) which on the one hand is screwed into a screwthreaded bore (8) provided in a bar (3, 32) and on the other hand is fixed in the other bar (4, 31) rotatably and in a condition of being prevented from moving axially.

17. A connector according to claim 16 characterised in that a pin (9) of the screwthreaded bolt (7) is guided in said other bar (4), wherein the end of the pin (9) is riveted while the screwthreaded bolt (7) bears with a step against the side of said bar (4) which is opposite to the rivet head (10).

18. A connector according to claim 16 or claim 17 characterised in that the screwthreaded bolt (7) is provided with a left-hand thread.

19. A connector according to one or more of claims 1 to 14 characterised in that the spreading element comprises a screwthreaded pin (14) and a screw (16) connected thereto, wherein the screwthreaded pin (14) is screwed into a screwthreaded bore (8) of the bar (6) while the screw (16) is supported with its head against the oppositely disposed bar (5).

20. A connector according to claim 19 characterised in that the head of the screw (16) bears against the bottom of a countersunk bore (17).

21. A connector according to one or more of claims 16 to 20 characterised in that the screwthreaded bolt (7) or the screwthreaded pin (14) has a tool receiving means (11, 18) at its free end face.

**Revendications**

1. Connecteur pour tuyaux ou profilés tubulaires, constitué de deux mâchoires de serrage en vis-à-vis, qui sont mobiles perpendiculairement à l'axe longitudinal au moyen d'au moins un élément expansible disposé entre elles, une butée étant fixée, au milieu et perpendiculairement à l'axe longitudinal, sur le côté extérieur d'au moins une mâchoire de serrage, caractérisé en ce que chaque mâchoire de serrage (1, 28, 30) présente, sur son côté tourné vers l'autre mâchoire de serrage (1, 28, 30), des nervures (2, 33, 34) s'étendant dans le sens longitudinal et formant des angles entre elles, qui se terminent dans une barrette (3, 4, 5, 6, 31, 32) destinée à recevoir l'élément expansible (7, 14).

2. Connecteur selon la revendication 1, caractérisé en ce que le corps du connecteur est réalisé en une pièce, dans laquelle les nervures (2), dont deux paires font saillie respectivement des mâchoires de serrage (1), et s'étendent en formant un losange, et dans laquelle les barrettes (3, 4, 5, 6) sont disposées dans les angles libres, en vis-à-vis du losange.

3. Connecteur selon la revendication 2, caractérisé en ce que les nervures (2) présentent des rétrécissements (13) dans leurs régions terminales tournées vers les barrettes (3, 4, 5, 6) ainsi que vers les mâchoires de serrage (1).

4. Connecteur selon la revendication 3, caractérisé en ce que les rétrécissements (13) se trouvent sur un côté des nervures (2).

5. Connecteur selon la revendication 3, caractérisé en ce que les rétrécissements (13) se trouvent sur les deux côtés des nervures (2).

6. Connecteur selon la revendication 3 ou 5, caractérisé en ce que les rétrécissements (13) se trouvent alternativement sur les deux côtés des nervures (2).

7. Connecteur selon la revendication 1, caractérisé en ce que chaque butée est réalisée sous la forme d'un disque (12) inséré dans la mâchoire de serrage (1), qui dépasse de la paroi extérieure de la mâchoire de serrage (1).

8. Connecteur selon la revendication 7, caractérisé en ce que le diamètre de chaque disque (12) est au moins égal au diamètre d'un outil pour actionner l'élément expansible.

9. Connecteur selon la revendication 7 ou 8, caractérisé en ce qu'une bague (23) est montée sur le connecteur dans la région des disques (12).

10. Connecteur selon la revendication 9, caractérisé en ce que la hauteur de la bague (23) est approximativement égale au diamètre des disques (12).

11. Connecteur selon la revendication 9, caractérisé en ce que la bague (23) présente sur sa face intérieure des évidements (24), dans lesquels s'insèrent les disques (12).

12. Connecteur selon la revendication 9, caractérisé en ce que la bague (23) présente une fente (26) dont la largeur est au moins égale au diamètre de l'outil pour actionner l'élément expansible.

13. Connecteur selon la revendication 1, caractérisé en ce que, pour le raccordement de tuyaux rectangulaires ou carrés (27), les mâchoires de serrage (28, 30) s'appuient dans les régions des angles des tuyaux (27).

14. Connecteur selon la revendication 13, caractérisé en ce que des nervures (33, 34), qui débouchent dans des barrettes (31, 32), s'étendent des régions d'appui de chaque mâchoire de serrage (28) vers le milieu du connecteur.

15. Connecteur selon la revendication 14, caractérisé en ce que la barrette (31) d'une mâchoire de serrage est entourée par la barrette (32) de l'autre mâchoire de serrage, et guidée dans cette barrette.

16. Connecteur selon l'une quelconque des revendications 1 à 14, caractérisé en ce que l'élément expansible consiste en un boulon fileté (7) qui est d'une part vissé dans un alésage fileté (8) prévu dans une barrette (3, 32), et qui est d'autre part fixé, rotatif et sans possibilité de déplacement axial, dans l'autre barrette (4, 31).

17. Connecteur selon la revendication 16, caractérisé en ce qu'un tourillon (9) du boulon fileté (7) est guidé dans ladite autre barrette (4), l'extrémité du tourillon (9) étant rivetée, tandis que le boulon fileté (7) s'appuie par un épaulement sur le côté de ladite barrette (4) qui est opposé à la tête de rivet (10).

18. Connecteur selon la revendication 16 ou 17, caractérisé en ce que le boulon fileté (7) est muni d'un filetage à gauche.

19. Connecteur selon l'une quelconque des revendications 1 à 14, caractérisé en ce que l'élément expansible consiste en un axe fileté (14) et une vis (16) assemblée à ce dernier, l'axe fileté (14) étant vissé dans un alésage fileté (8) de la barrette (6), tandis que la vis (16) s'appuie par sa tête contre la barrette opposée (5).

20. Connecteur selon la revendication 19, caractérisé en ce que la tête de la vis (16) s'appuie contre le fond d'un alésage conique (17).

21. Connecteur selon l'une quelconque des revendications 16 à 20, caractérisé en ce que le boulon fileté (7) ou selon le cas l'axe fileté (14) présente sur son côté frontal libre un logement d'outil (11, 18).

EP 0 240 784 B1

Fig. 1

Fig. 2

1

*Fig. 3*

*Fig.4*

EP 0 240 784 B1

Fig. 5

Fig. 8

Fig. 6

Fig 7

Fig. 9

Fig. 10

3